# EUROPEAN PATENT APPLICATION

(11) **EP 4 360 518 A1**
(43) Date of publication of application: **01.05.2024**
(21) Application number: 23204724.1
(22) Date of filing: 19.10.2023
(51) Int. Cl.: A47J 43/042

(54) **AUTOMATIC BLENDER WITH CLEANING SYSTEM AND ASSOCIATED PROCEDURE**

(30) Priority: 24.10.2022 ES 202230915
(71) Applicant: Garcia Olmos, Victor Jose, 28042 Madrid (ES)
(72) Inventor: Garcia Olmos, Victor Jose, 28042 Madrid (ES)
(74) Representative: Maldonado Jordan, Julia

(57) **Abstract**

Automatic cleaning system for a blender that includes a feeding duct, configured to locate the food inside it; food blending media; a pusher element, configured to bring the food closer and obtain the blend; and a dispensing conduit configured to lead the liquid obtained to a container that comprises a cleaning system with internal cleaning elements with: at least one water projection hole; means for conducting water from an internal and/or external supply; and means for propelling water from the feed to the orifices for projecting water through the conduction means; where the cleaning elements are configured to act automatically and/or manually after a food blending procedure, spray water through the water projection holes, and drag the remains of the blended food out of the blender.

## Description

### FIELD OF THE INVENTION

The present invention is part of the sector of the food squeezing and/or blending devices, particularly, to the sector of fruit and/or vegetables blending machines, which include pressing them to achieve a derived and available liquid to be consumed by a user.

Specifically, it refers to an automatic blender, configured to make a smoothie from a set of fruits and/or vegetables, without the user's intervention, paying particular attention to the automatic cleaning of the ducts and the interior if the aforementioned automatic blender.

### BACKGROUND OF THE INVENTION

At present, devices for preparing a smoothie from a commonly used home appliances are widely known, which require the intervention of the user, being forced to participate in an active way, in the preparation of said smoothie.

This blender machines comprise a feeding duct to introduce the food to be blended, and a pusher tube included inside the duct itself, which is used to press the food against the blending means thereof, and the using of the dispensing ducts that will collect the obtained liquid, that will be dosed to the desired container.

In this case, the systems belonging to the state of the art, the user must make: the selection of the food to be used to make the combination, the removal of the pusher tube, the introduction of the food inside the feeding duct, placement of the pusher tube, placement of the recipe at the feeding duct outlet, and activation of the system, which will start the motor, and which must be accompanied with a new action by the user, who must press with the pusher tube to ensure that the food reaches de blending means.

Finally, the system must be cleaned, removing the solid and/or liquid waste that remain in the ducts, both feeding ducts and dispensing ducts, as well as all the elements present in the blender machine. This step is configured as essential when leaving the system ready for further use.

In the state of the art, we can find documents that claim to carry out certain maneuvers automatically, but applied only to citrus squeezing systems.

These machines can have different configurations, the most common being the one that uses a squeezing system with two female containers with an inner hole with a central axis, that can rotate in the opposite direction, and with cavities to house the fruit to be squeezed, and two male containers with an internal hole, with a central axis, located below the female containers, so that each male container can rotate in the opposite direction to the corresponding female container located above it. The male containers comprising some shaped projections that they can be attached to the cavities of the female containers to squeeze the juice.

An example of these machines can be found in document ES1240714, which describes an automatic squeezing machine, which comprises a fruit squeezing group, which comprises a fruit squeezing system, with two male elements and two female elements, with a synchronized rotary movement.

We also can find another example in the document ES1099708, in which describes an improved machine with respect to those existing in the state of the art, which comprises a drain to collect the water of the feeder, leading it to a secondary drain; an outlet for the waste of the fruits, and a filter suitable for drag the waste pulp.

Additionally, the cited devices of the previous documents are directed only to the description of automatic citrus squeezing machines, and the other existing in the state of the art, are not automatic, and require the direct intervention of a user throughout the entire pressing or blending process.

That is why, a new system is needed, that allows the fully automating the fruit and/or vegetable blending procedure, avoiding the needing of the user to intervene in any of its steps, including cleaning the ducts and the blending area in an efficient way.

### SUMMARY OF THE INVENTION

The automatic blender with cleaning system and the associated operating procedure that the invention proposes is configured, therefore, as a remarkable novelty within its field of application, since according to its implementation and exhaustively, the stated objectives are satisfactorily achieved, The characterizing details that make it possible and that distinguish them are conveniently included in the final claims that accompany this description.

Specifically, the present invention discloses an automatic blending system, that is capable of carrying out the cleaning procedure automatically, so that, after making a blend automatically or manually, the device itself is capable of removing the waste from the ducts and the blending area without the intervention of the user.

To achieve this objective, the invention proposes the use of an annular or similar element, which is located inside the blender, in the blending area, and which allows cleaning said zona and all the conduits, and which includes water projection means, that will be used to drag the waste present in the ducts and in the blending area, and clean them before the start of a new blending process.

In this way, it starts from a common blender, which comprises at least one feed duct into which the food to be blended is introduced, with a pusher that advances manually and/or automatically, configured to push the food introduced into the feed duct, which, with the help of the blending means located at the base of the feed duct, extracts the liquid from the fruits. It also comprises a final platform, which is used to place the reception container for the extracted liquids, and a waste deposit.

To the previously described common blender, the present invention adds an annular, or substantially annular, internal cleaning element that surrounds at least partially the feeding duct, and that includes a plurality of water projection holes, configured to expel water with a certain amount of pressure, which runs through the elements located in the blending area and the ducts, dragging the waste of the food that have remained in them, and carrying out the automatic cleaning of the blender.

Likewise, the cleaning element will be connected to water supply means, such as:
- an impulsion pump, which will be in charge of feeding the cleaning water from an external system;
- a tank or a general water supply connection of a home or an establishment;
- conduction means, which transport the water to the cleaning element and, therefore, to the aforementioned water projection holes.

In particular, this cleaning system may be installed in an automatic blender according to the document P202230180 of the same applicant, and which describes an automatic blending system, which is capable of carrying out the procedure for introducing the fruit, pushing it to extract the liquid, and its dispensing in a container, without the direct intervention of the user.

This last embodiment includes the use of a least one feeding platform for the fruit and an automatic pusher that moves through the feeding conduit, in which the automatic cleaning system object of the present invention is located.

In the first place, the feeding platform will comprise means for carrying out a rotation movement, which allows it to alternate between a rest position, in which the platform is in a horizontal position, or substantially horizontal; and a food pour position, in which the platform is in a nearly vertical position.

Secondly, the automatic pusher element that includes means for actuating a movement, which will give it an upward and/or downward vertical displacement, depending on the needs of the procedure, along a feeding duct in which the food prepared to be blended is located. In particular, the translational movement of the pusher element will be carried out by using an endless screw driven by an electric motor.

Likewise, it will also comprise means responsible for temporarily removing the pusher element, so that it does not interfere with the rotational movement of the feeding platform or with the loading of the feeder tube.

Lastly, and to complete the automation of the procedure, the system will comprise the cleaning element, in charge of carrying out an automatic cleaning of the ducts, preventing any remains that could contaminate the following blending procedures.

In this way, the feeding platform, initially in a horizontal position, is configured to receive at least one tray with fruit inside, proceeding to carry out the rotation movement that precipitates the food to the blending ducts, returning to its initial position, horizontal so as not to interfere with the movement of the pusher element.

The food tray used may comprise a morphology that allows its removable fixing to the platform itself, so that only the food is allowed to fall, preventing the tray from passing into the blender ducts.

Optionally, the invention also comprises the inclusion of means for detecting the presence of a tray on the feeding platform, so that the start of the procedure is not allowed if the presence of the tray on the platform is not detected.

Next, once the food is in the liquefied feeding duct, the pusher element is placed in its correct position, that is, coaxial with said duct, and the downward movement begins from an initial position to its end of run position.

During this movement, the pusher element will press the food against the food blending means located at the end of the feeding duct, achieving the extraction of the liquids present in them, precipitating them to a dispensing duct, which will guide them to a container, final, for its subsequent withdrawal by the user. Where the aforementioned means for blending the food will commonly be comprised of a grater disk driven by an electric motor, configured to work in conjunction with the rest of the elements of the system.

After the blending of the food, when the pusher element has reached the end of the stroke position and the blending has been dispensed, the system will feed the cleaning element object of the present invention with water, or any cleaning liquid. , reaching all the ducts of the system, and cleaning them before proceeding to make the next blend.

In this way, the automatic production of a blended drink is achieved, from fruit and/or vegetable-type foods, with the corresponding subsequent cleaning. In this case, the user only has to place a tray with the aforementioned foods on the feeding platform, and activate the start of the procedure, which may be manual or automatic, to subsequently remove the container containing the final blend.

Apart from the above elements, the invention includes a circular platform for the automatic positioning of the blender container, with which the use of a circular platform is intended that includes a first position for placing the final blender receiving container, configured to perform a 180° turn, approximately, positioning it coincident with the dispensing conduit through which the food blend is obtained, proceeding to dispense it and correspondingly fill the container.

Finally, the platform is rotated again until it reaches its initial position, in which the user can proceed to remove the container for receiving the liquid, for its subsequent consumption.

The circular platform, like the feeding platform, may include a sensor for the presence of the container, so that it does not proceed to rotate it and dispense the smoothie if a container is not detected in the tray intended for that purpose..

Also, in the diametrically opposite position to the one intended for the placement of the liquid reception container, there will be a pipe that will carry the water used in the cleaning procedure of the system pipes, ensuring that it is stored or evacuated correctly.

### DESCRIPTION OF THE DRAWINGS

To complement the description that is being made and in order to help a better understanding of the characteristics of the invention, a set of drawings is attached as an integral part of said description, where, with an illustrative and non-limiting nature, what has been represented has been following:

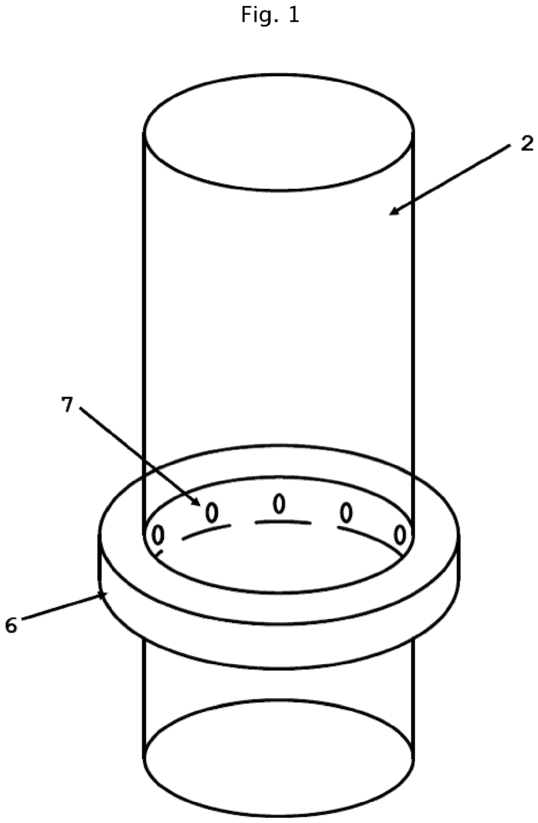

Figure 1.- General view of the cleaning element located inside the supply pipe, with detail of the water projection holes.

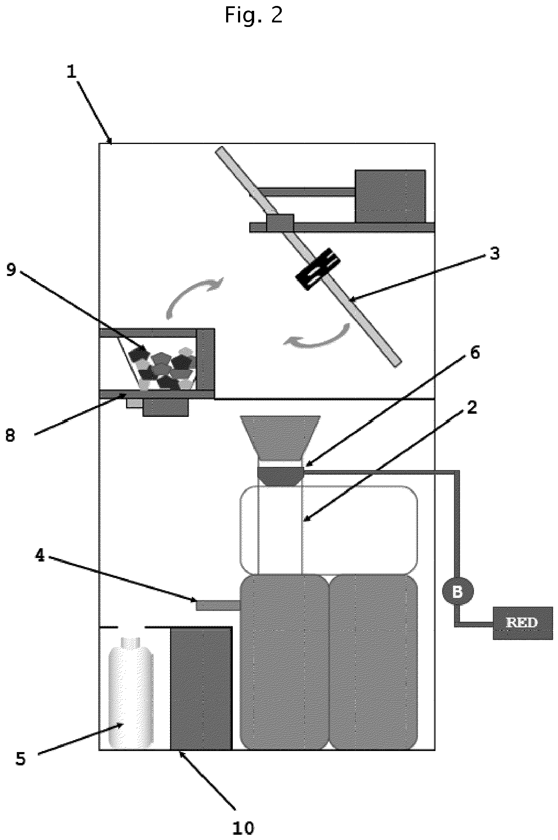

Figure 2.- General drawing of the automatic blending system with external power supply of the automatic cleaning system.

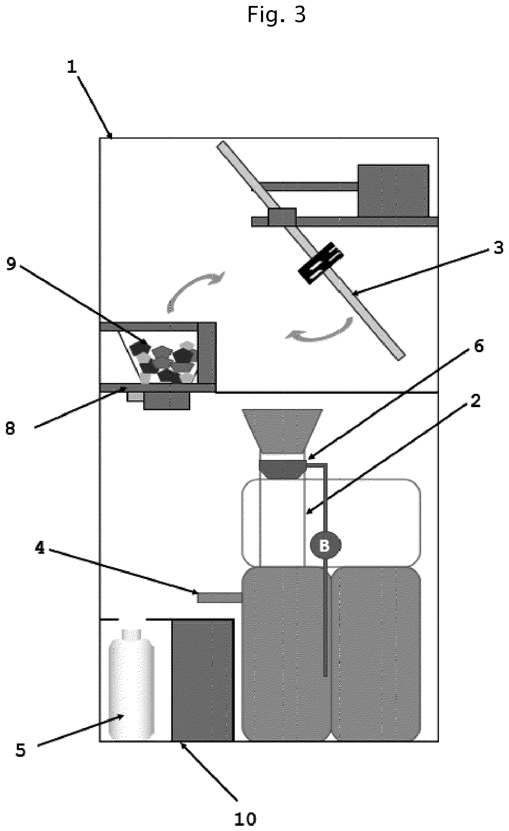

Figure 3.- General view of the automatic blending system with internal feeding of the automatic cleaning system.

In the figures described above it is also possible to observe, in its lower part, the operating mode of the positioning platform, which alternates between an initial position for placing the container, and a final position for dispensing the liquid inside the container.

List of references and figures:
1. External structure
2. Feeding duct
3. Pusher element
4. Dispensing duct
5. Container
6. Cleaning element
7. Water projection holes
8. Feed platform
9. Tray with food
10. Positioning platform

### PREFERRED EMBODIMENT OF THE INVENTION

In the following detailed description of the preferred embodiments, reference is made to the accompanying drawings which form a part of this specification, and in which are shown by way of illustration specific preferred embodiments in which the invention may be embodied. These embodiments are described in sufficient detail to enable those skilled in the art to carry out the invention, and it is understood that other embodiments may be used and logical structural, mechanical, electrical, and/or chemical changes may be made without departing from the scope. of the invention. To avoid details not necessary to enable those skilled in the art to carry out the detailed description should therefore not be taken in a limiting sense.

Specifically, the present invention describes an automatic blender with a cleaning system, which includes a structure (1), a feeding duct (2), configured to place the food inside, food blending means located at the end of the feed chute, a pusher element (3), configured to push the food located in the feed chute (2) and
get the smoothie out of food; and a dispensing conduit (4), configured to conduct the liquid obtained to a container (5) located outside the structure (1).

Where the automatic cleaning system is characterized in that it comprises a cleaning element (6), with:
- at least one water projection hole (7);
- water conduction means, from an internal supply, such as a water tank, or an external supply, such as the general water supply of a home or establishment;
- and means for boost the water, such as a driving pump, to transport it from the supply to the water projection holes (7), through the water conduction means.

Where the cleaning element (6) is configured to act preferably automatically, although it may also be manual, after a food blending procedure, so that it sprays water through the water projection holes (7), and drag the remains of the blended food outside the blender.

According to this first embodiment, there is a cleaning system for a blending machine, which can act automatically after performing an extraction of the food blend, so as to eliminate excess remains in the ducts of said blender, by means of projection of water through the cleaning element, which is fed by means of a drive pump or the like.

In a preferred embodiment, the cleaning element (6) has an annular or substantially annular shape, and it will surround, at least partially, a segment of the feeding duct (2). In this way, the projection of water will be carried out directly on the internal areas of the assembly formed by the lid of the blender and the feeding duct (2), facilitating the precipitation of the remains that remain in them.

In a preferred embodiment, the automatic blender with cleaning system also comprises the following process automation elements:
- a feed platform (8) configured to house a tray (9), by means of removable fixing means, comprising means for actuating an horizontal rotation movement, preferably an electric motor, between a horizontal or substantially horizontal initial position, and an vertical or substantially vertical position; configured to automatically move the feed platform (8) to its final position, precipitate the food housed in the tray (9) to the feeding duct (2), and return to its initial position.
- an automatic pusher system, comprising drive means for a vertical displacement movement of the pusher element (3), preferably a worm with an electric drive motor, between an upper initial position and a lower end position; configured to automatically move said pusher element (3) from its initial position to its final position, positioning the food located in the feed duct (2) for blending and returning to its initial position; and configured to carry out this movement following the rotation movement of the feed platform (8);
- power supply means;
- and a control unit operatively connected to the above means.

According to this last embodiment, there is a completely automatic blender, which automatically feeds the duct with the food, pushes it and positions them for blending. Subsequently, it channels said liquefied to a container. And it also includes the cleaning system that is the object of the present invention, so that, at a later stage, it could automatically clean the feed duct and the blending area, eliminating leftover food remains after the blending process.

In a preferred embodiment, the automatic cleaning system will also comprise cleaning means by using the pusher element (3), which will include at least one water outlet located on its perimeter, fed through its own conduction means that will transport the water from a container and/or an external water supply system, through the use of a high pressure water pump.

According to this embodiment, the head of the pusher element will comprise a pressurized water ejection hole, which will be combined with the cleaning element (6), maximizing the cleaning carried out in the described automatic blender machine, since water will be projected both from the cleaning element (6) and from the periphery of the head of the pusher element (3).

In a preferred embodiment, the automatic blender will include means for the presence of the tray (9) on the feed platform (8), so that the food dispensing procedure to the feeding duct (2) is not started if it is not started. it detects the presence of the tray (9), avoiding an empty operation of the system.

Likewise, in another preferred embodiment, and with the aim of avoiding possible collisions between the pusher element (3) and the feed platform (8), the pusher element (3) will comprise drive means for a rotation, preferably an electric motor, configured to withdraw the pusher element (3) from the path of rotation of the feed platform (8).

In another preferred embodiment, the automatic blender comprises a positioning platform (10) for a container (5) for containing the blend made, with drive means for rotating around the vertical axis, preferably an electric motor, where the platform comprises at least one first location to accommodate said container (5).

Where the positioning platform (10) comprises a first position for placing the container (5), and a second dispensing position, in which the container (5) is aligned coincidentally with the dispensing duct (4), in such a way that so that the means for actuating the rotation around the vertical axis are configured to alternate the position of the positioning platform (10), between the first position for placing the container (5) and the second dispensing position.

Preferably, the positioning platform (10) will comprise a conduit to a container configured to store the surplus water injected from cleaning the conduits through the cleaning system object of the present invention or to a drain.

Based on the previous embodiments, the operating procedure of the automatic blender with cleaning system is also presented, which includes the following stages:
- placing the tray (9) with the food on the feed platform (8);
- carrying out the rotation of the feed platform (8), from its initial position to its final position, so that the food from the tray (9) falls into the feeding duct (2);
- return of the feed platform (8) to its initial position;
- carrying out the positioning of the pusher (3);
- carrying out the downward displacement movement of the pusher element (3) along the feeding duct (2), carrying out the positioning of the food;
- blend the food;
- precipitate of the liquid into the container (5) through the dispensing conduit (4);
- return of the pusher element to its initial position;
- and an injection of water through the water projection holes (7) of the cleaning element (6), configured to clean the blending and/or dispensing area (4).

This stage is included to fully automate the food blending procedure, since the user will only have to intervene to place the food on the tray (9), and to remove the container (5) with the blend already dispensed, not having to intervene in the cleaning procedure, which will be carried out automatically by means of the automatic cleaning system object of the present invention.

Likewise, the possibility of injecting water through the outlet located on the perimeter of the pusher element (3) is included in the final stage, so as to maximize the cleaning operation of the different ducts.

Based on the last described embodiments, the present invention also includes the initial stages of placing the container (5) on the positioning platform (10), and turning the platform from an initial position to a final position, in wherein the container (5) is located coincident with the dispensing conduit (4); and the final stage of returning the positioning platform (10) to the initial position, so that the user can remove the container (5) with the liquid in a simple and ergonomic manner.

Additionally, and also taking into account the last described embodiments, the procedure includes a first stage of detecting the presence of the container (5) on the positioning platform (10).

In this way, and as has been said previously, there is an operating procedure associated with the automatic blender with the cleaning system described above, which manages to automate all the stages of blending food, the user having to intervene only in the placement of the food on the feeding platform (8), and the removal of the container (5) with the blend already dispensed. Particularly, and in accordance with the present invention, it is possible to automate the cleaning procedure of the feeding and dispensing conduits, as well as the entire blending area, by spraying water through the holes.

Having sufficiently described the nature of the present invention, as well as the way of putting it into practice, it is not considered necessary to make its explanation more extensive so that any expert in the field understands its scope and the advantages derived from it, stating that, Within its essentiality, it may be put into practice in other embodiments that differ in detail from the one indicated by way of example, and which will also be covered by the protection that is sought provided that its fundamental principle is not altered, changed, or modified..

## Claims

1. **Automatic blender with cleaning system** that comprises a structure (1), a feeding duct (2), configured to locate the food inside; food blending means located at the end of the feed duct; a pusher element (3), configured to bring the food located in the feed conduit (2) closer to the blending means and obtain the blending of the food; and a dispensing conduit (4) configured to conduct the liquid obtained to a container (5) located outside the structure (1), **characterized in that** it comprises a cleaning element (6) with:
∘ at least one water projection hole (7);
∘ means for driving water from an internal and/or external supply to the water projection holes (7);
∘ and means for boost water from the feed to the water projection holes (7) through the conduction means;
where the cleaning element (6) is configured to act automatically and/or manually after a food blending procedure, and to spray pressurized water through the water projection holes (7).
and where the cleaning element (6) has an annular shape, and is configured to surround, at least partially, the feeding conduit (2).

2. **Automatic blender with cleaning system** according to the preceding claim, **characterized in that** it comprises:
∘ a feeding platform (8) configured to house a tray (9), which comprises drive means for a rotation movement between an initial horizontal position and a vertical final position;
∘ an automatic pusher system, comprising drive means for a vertical displacement movement of the pusher element (3), between an upper initial position and a lower final position;
∘ power supply means;
∘ and a control unit operatively connected to the above means;
where the rotation movement of the feeding platform (8) is configured to automatically move the feeding platform (8) to its final position, and return to its initial position;
where the vertical movement of the pusher element (3) is configured to automatically move the pusher element (3) from its initial position to its final position, and return to its initial position;
and where the vertical displacement movement of the pusher element (3) is configured to be activated after the rotation movement of the feeding platform (8) is carried out.

3. **Automatic blender with cleaning system** according to the preceding claim, **characterized in that** the pusher element (3) comprises means for injecting water through the pressing head of the pusher element (3), which is configured to project radially, through at least one outlet located on its perimeter, where the water injection means comprise a water container and/or an external water supply system, water conduction means from the container and/or the water supply system to the pusher element and a high pressure water pump.

4. **Automatic blender with cleaning system** according to the claim 2, **characterized in that** the feeding platform (8) comprises removable fixing means with the tray (9).

5. **Automatic blender with a cleaning system** according to the preceding claims, **characterized in that** the feeding platform (8) comprises means for detecting the presence of the tray (9).

6. **Automatic blender with cleaning system** according to the preceding claims, **characterized in that** the automatic system for approximating the food with the pusher element (3) comprises drive means for a rotation of the pusher element (3).

7. **Automatic blender with cleaning system** according to the preceding claim, **characterized in that** the drive means for a rotation of the pusher element (3) comprise an electric motor.

8. **Automatic blender with cleaning system** according to the previous claims, **characterized in that** the drive means for the rotation movement of the feeding platform (8) comprise an electric motor.

9. **Automatic blender with cleaning system** according to any of the preceding claims, **characterized in that** the drive means for a movement of vertical displacement of the pusher element (3) comprise an endless screw driven by an electric motor.

10. **Automatic blender with cleaning system** according to any of the preceding claims, **characterized in that** it comprises a positioning platform (10) for the container (5), which comprises drive means for rotating it around the vertical axis,
where the platform comprises at least one first location to house the container (5),
where the positioning platform (10) comprises a first position for placing the container (5) in the location for housing the container (5), and a second dispensing position, in which the container (5) is coincidentally aligned with the dispensing conduit (4);
and where the means for actuating a rotation around the vertical axis are configured to alternate between the first placement position of the container (5) and the second dispensing position.

11. **Automatic blender with cleaning system** according to the preceding claim, **characterized in that** the positioning platform (10) comprises a conduit to a container and/or to a drain.

12. **Automatic blender with cleaning system** according to any of claims 10 and 11, **characterized in that** the drive means of the positioning platform (10) for rotation around the vertical axis are comprised of an electric motor.

13. **Procedure for operating an automatic blender with a cleaning system** according to the preceding claims, **characterized in that** it comprises at least the following stages:
∘ placement of the tray (9) with the food on the feeding platform (8);
∘ carrying out the rotation of the feeding platform (8) from its initial position to the final position, configured to precipitate the food from the tray (9) in the feeding duct (2);
∘ return of the feeding platform (8) to its initial position;
∘ pusher positioning;
∘ carrying out the downward displacement movement of the pusher element (3) along the feeding conduit (2), from its initial position to its final position, configured to bring the food closer against the blending means;
∘ precipitate of the liquid to the container (5) through the dispensing conduit (4);
∘ return of the pusher element (3) to its initial position.
∘ injection of water through the water projection holes (7) of the cleaning element (6), configured to clean the feeding and/or dispensing conduits (2, 4) and the blending area.

14. **Procedure for operating an automatic blender with a cleaning system** according to the preceding claim, **characterized in that** it comprises a final stage of injecting water through the perimeter outlet of the pusher element (3), configured to clean the feed ducts, and/or dispensing (2,4) and the blending area.

15. **Procedure for operating an automatic blender with a cleaning system** according to the preceding claims, **characterized in that** it comprises initial stages of:
∘ placement of the container (5) on the positioning platform (10);
∘ rotation of the positioning platform (10) from the initial position, to a final position in which the container (5) is located coincidentally with the dispensing conduit (4);
∘ and a final stage of return of the positioning platform (10) from the final position to the initial position.

16. **Procedure for operating an automatic blender with a cleaning system** according to the preceding claim, **characterized in that** it comprises an initial stage of detecting the presence of a container (5) on the positioning platform (10).

17. **Procedure for operating an automatic blender with a cleaning system** according to the preceding claims, **characterized in that** it comprises a stage prior to carrying out the rotation of the feeding platform (8) from its initial position to the final position; detecting the presence of a tray (9) on the feeding platform (8).

18. **Procedure for operating an automatic blender with a cleaning system** according to the preceding claims, **characterized in that** it comprises:
∘ a stage prior to carrying out the downward displacement movement of the pusher element (3) along the supply conduit (2), from its initial position to its final position, placing the pusher element (3) in its position of work, coinciding with the feeding duct (2);
∘ and a final stage of withdrawal of the pusher element (3) from its working position to its rest position, configured so as not to intervene in the rotational movement of the feeding platform (8) from its initial position to the final position.
